# EUROPEAN PATENT APPLICATION

(11) **EP 4 604 102 A1**
(43) Date of publication of application: **20.08.2025**
(21) Application number: 22962997.7
(22) Date of filing: 25.10.2022
(51) Int. Cl.: G09F 3/02, G02B 30/26

(54) **THREE-DIMENSIONAL IMAGE AND TEXT STRUCTURE, IMAGE AND TEXT APPARATUS, AND TERMINAL DEVICE**

(71) Applicant: Huawei Technologies Co., Ltd., Shenzhen, Guangdong 518129 (CN)
(72) Inventor: REN, Hui, Shenzhen, Guangdong 518129 (CN); ZHANG, Youming, Shenzhen, Guangdong 518129 (CN); LI, Guowei, Shenzhen, Guangdong 518129 (CN)
(74) Representative: Goddar, Heinz J.
(86) International application number: PCT/CN2022/127322
(87) International publication number: WO 2024/087010

(57) **Abstract**

A stereoscopic image text structure, an image text apparatus, and a terminal device are provided. The stereoscopic image text structure (10) includes a micro image text module (1) and a micro lens array module (2) that are sequentially stacked, and a stacking direction of the micro image text module (1) and the micro lens array module (2) is a first direction. The micro lens array module (2) includes a plurality of micro unit structures (211) arranged perpendicular to the first direction, and each micro unit structure (211) has a micronano size. A medium (212) is filled between any two adjacent micro lens units (21) and between any two adjacent micro unit structures (211), and a refractive index of the medium (212) is not equal to a refractive index of the micro unit structure (211). The micro image text module (1) includes a plurality of micro image text units (11), and the plurality of micro image text units (11) are arranged perpendicular to the first direction. The micro lens array module (2) is configured to modulate an incident light ray, so that light rays that are from different object points on the micro image text module (1) and that have a same direction form information about a viewpoint. A binocular system of an observer can integrate information of a plurality of viewpoints to present three-dimensional stereoscopic texture display.

## Description

### TECHNICAL FIELD

This application relates to the field of stereoscopic display technologies, and in particular, to a stereoscopic image text structure, an image text apparatus, and a terminal device.

### BACKGROUND

A stereoscopic texture technology can present a planar pattern in stereoscopic effect by using a specific optical method. A most significant feature of stereoscopic effect combined with a human visual system is binocular parallax and motion parallax. Image information obtained by a binocular system is approximate but not completely the same. In other words, different visual presentations exist at different viewpoints, thereby forming the binocular parallax. Depth information of an image may be obtained through post-processing fusion and collation, to obtain a stereoscopic image. Image information obtained by a monocular system in a movement process in any direction is continuous and approximate but not completely the same, so that stereoscopic effect is obtained through sensing. The specific optical method is to implement binocular parallax effect and motion parallax effect by using an optical element having an imaging or light splitting function. Eyes of a person may be considered as the binocular system. Different image information obtained by the eyes may be used to sense depth information of an image through fusion in a brain, and an image obtained by the eyes of the person in relative motion of an object may generate the motion parallax.

With development of science and technologies, the stereoscopic texture technology is used on a housing of a terminal device, to present stereoscopic display effect. However, compatibility between the current stereoscopic texture technology and the housing of the terminal device is poor, and stereoscopic display effect cannot meet a use requirement.

### SUMMARY

This application provides a stereoscopic image text structure, an image text apparatus, and a terminal device, which can be well compatible with a terminal architecture to implement good stereoscopic image display.

According to a first aspect, this application provides a stereoscopic image text structure. The stereoscopic image text structure can implement good stereoscopic image text display. The stereoscopic image text structure includes a micro image text module and a micro lens array module that are sequentially stacked. Herein, a stacking direction of the micro image text module and the micro lens array module is set to a first direction. The micro lens array module includes a plurality of micro unit structures with a micronano size. The micronano size means that a structure size is in a micrometer level or even a nanometer level. The plurality of micro unit structures are arranged perpendicular to the first direction, a medium is filled between any two adjacent micro unit structures, and a refractive index of the medium is not equal to a refractive index of the micro unit structure. When a light ray passes through the micro lens array module, the light ray is deflected under a joint action of the micro unit structure and the medium, and the micro lens array module can also modulate the light ray. During specific use, the micro lens array module is disposed based on a use requirement, so that a light ray from micro image text module can form preset optical effect after being modulated by the micro lens array module. The micro image text module includes a plurality of micro image text units, and the plurality of micro image text units in the micro image text module are arranged perpendicular to the first direction. Under irradiation of a light source, each micro image text unit corresponds to light rays in a plurality of directions, and the light ray in each direction carries different information of the micro image text unit. The micro lens array module modulates an incident light ray from the micro image text module, and forms stereoscopic image text information on a side that is of the micro lens array module and that is away from the micro image text module. Eyes and a brain system of an observer can integrate stereoscopic image text information and sense three-dimensional stereoscopic effect. The medium is not gas, and may be a solid, a fluid, or another material form. A surface that is of the medium and that is away from the micro image text module is flush with a surface that is of the micro unit structure and that is away from the micro image text module, so that the stereoscopic image text structure can be combined with various substrate architectures, and can be applied to various scenarios in which stereoscopic image text display is required.

In an arrangement direction of the micro unit structures, the micro lens array module may be divided into a plurality of optical regions. The micro unit structure and the medium that are located in a same optical region form a micro lens unit. This is equivalent to that the micro lens array module includes a plurality of micro lens units arranged perpendicular to the first direction, each micro lens unit includes a plurality of micro unit structures, and a medium is filled between any two micro unit structures. In addition, the medium may also coat a periphery of the micro unit structure in the arrangement direction of the micro unit structures. For the micro lens array module, it is equivalent to that the medium is filled between any two adjacent micro unit structures, and the medium is also filled between any two adjacent micro lens array modules. Possibly, the medium may alternatively be disposed on an edge that is of the micro lens array module and that is perpendicular to the first direction, to protect a structure.

The micro lens unit may be any one or a combination of a binary optical element, a metasurface optical element, and a diffractive optical element. In an arrangement direction of the micro lens units, a maximum radial size of each micro lens unit is less than 150 µm.

When the micro lens unit is the metasurface optical element, there needs to be a difference greater than 0.5 between the refractive index of the medium and the refractive index of the micro unit structure, to properly modulate the light ray. A transparent material that may be selected for the medium includes one or a combination of silicon dioxide (silicon dioxide, SiO₂), polyethylene glycol terephthalate (polyethylene glycol terephthalate, PET), and a photoresist material. A transparent material that may be selected for the micro structural unit includes one or a combination of silicon nitride (silicon nitride, Si₃N₄), gallium nitride (gallium nitride, GaN), and titanium dioxide (titanium dioxide, TiO₂).

Specifically, the plurality of micro lens units may be periodically arranged, pseudo-randomly arranged, or uniformly randomly arranged. A manner of forming the micro image text unit is not limited, and may be specifically a groove ink-filled structure or in a metasurface structure color.

When the plurality of micro lens units are periodically arranged, an array period of the plurality of micro image text units may be the same as an array period of the plurality of micro lens units. Possibly, in the first direction, the plurality of micro image text units are in a one-to-one correspondence with the plurality of micro lens units.

According to different imaging modes, an optical path between the micro image text module and the micro lens array module is less than twice a focal length of the micro lens unit. Specifically, when the optical path is equal to the focal length of the micro lens unit, a mode in which the stereoscopic image text structure implements a stereoscopic image is a focusing mode. When the optical path is less than the focal length of the micro lens unit, the mode in which the stereoscopic image text structure implements the stereoscopic image is a virtual mode. When the optical path is greater than the focal length of the micro lens unit and less than twice the focal length of the micro lens unit, the mode in which the stereoscopic image text structure implements the stereoscopic image is a real mode.

The micro lens array module further includes a substrate layer, and the micro unit structure and the medium are fastened to a side that is of the substrate layer and that is away from the micro image text module. Generally, it may be considered that a product of a thickness of the substrate layer in the first direction and a refractive index of the substrate layer is the optical path between the micro image text module and the micro lens array module. A material of the substrate layer includes any one or a combination of at least two of silicon dioxide, silicon nitride, polyethylene glycol terephthalate, and photoresist.

In a possible implementation, there are a plurality of micro image text modules, and the plurality of micro image text modules are stacked in the first direction.

According to a second aspect, this application provides an image text apparatus, including a substrate and any stereoscopic image text structure provided in the foregoing technical solution, where the stereoscopic image text structure is disposed on a surface of the substrate. The substrate may be specifically a film layer, or may be a housing. This is not specifically limited. Because the stereoscopic image text structure has a flat surface, the stereoscopic image text structure can be well compatible with and packaged with substrates of various materials. This helps expand an application scenario of a stereoscopic texture technology under stable structure protection effect.

According to a third aspect, this application provides a terminal device, including the foregoing device housing. The terminal device may be an electronic device such as a laptop, a mobile phone, or a smartwatch. A terminal device with a stereoscopic image text structure can meet an appearance requirement of a consumer for the terminal device.

### BRIEF DESCRIPTION OF DRAWINGS

FIG. 1a is a diagram of a principle of implementing a stereoscopic image in the conventional technology;
FIG. 1b is a diagram of a principle of implementing a stereoscopic image in the conventional technology;
FIG. 1c is a diagram of a principle of implementing a stereoscopic image in the conventional technology;
FIG. 2a is a diagram of a structure of a stereoscopic image text structure according to an embodiment of this application;
FIG. 2b is a diagram of a structure of a stereoscopic image text structure according to an embodiment of this application;
FIG. 2c is a diagram of a structure of a micro lens unit in a stereoscopic image text structure according to an embodiment of this application;
FIG. 2d is a diagram of a structure of a micro lens array module in a stereoscopic image text structure according to an embodiment of this application;
FIG. 3 is a diagram of a structure of a stereoscopic image text structure according to an embodiment of this application;
FIG. 4a is a diagram of a structure of a transmissive stereoscopic image text structure according to an embodiment of this application;
FIG. 4b is a diagram of a structure of a reflective stereoscopic image text structure according to an embodiment of this application;
FIG. 5a is a diagram of a structure of a stereoscopic image text structure according to an embodiment of this application;
FIG. 5b is a diagram of a structure of a stereoscopic image text structure according to an embodiment of this application;
FIG. 6a is a diagram of a structure of a stereoscopic image text structure according to an embodiment of this application;
FIG. 6b is a diagram of a structure of a micro lens unit in a stereoscopic image text structure according to an embodiment of this application;
FIG. 7a is a diagram of a structure of a micro unit structure in a stereoscopic image text structure according to an embodiment of this application;
FIG. 7b is a diagram of a structure of a micro unit structure in a stereoscopic image text structure according to an embodiment of this application;
FIG. 7c is a diagram of a structure of a micro unit structure in a stereoscopic image text structure according to an embodiment of this application;
FIG. 8 is a top view of a micro lens unit in a stereoscopic image text structure according to an embodiment of this application;
FIG. 9a is a top view of a micro lens array module in a stereoscopic image text structure according to an embodiment of this application;
FIG. 9b is a top view of a micro lens array module in a stereoscopic image text structure according to an embodiment of this application;
FIG. 9c is a top view of a micro lens array module in a stereoscopic image text structure according to an embodiment of this application;
FIG. 10 is a diagram of a structure of a micro image text module in a stereoscopic image text structure according to an embodiment of this application;
FIG. 11a is a diagram of a structure of a stereoscopic image text structure according to an embodiment of this application;
FIG. 11b is a diagram of a structure of a stereoscopic image text structure according to an embodiment of this application;
FIG. 12 is a diagram of a structure of a stereoscopic image text structure according to an embodiment of this application;
FIG. 13 is a diagram of a structure of a micro image text module in a stereoscopic image text structure according to an embodiment of this application;
FIG. 14a is a diagram of a principle of a stereoscopic image text structure according to an embodiment of this application;
FIG. 14b is a diagram of a principle of a stereoscopic image text structure according to an embodiment of this application;
FIG. 14c is a diagram of a principle of a stereoscopic image text structure according to an embodiment of this application;
FIG. 15 is a diagram of a structure of a stereoscopic image text structure according to an embodiment of this application;
FIG. 16a is a diagram of a structure of a stereoscopic image text structure according to an embodiment of this application;
FIG. 16b is a top view of a micro image text module in FIG. 16a;
FIG. 17 is a diagram of a structure of an image text apparatus according to an embodiment of this application; and
FIG. 18 is a diagram of a structure of a terminal device according to an embodiment of this application.

### DESCRIPTION OF EMBODIMENTS

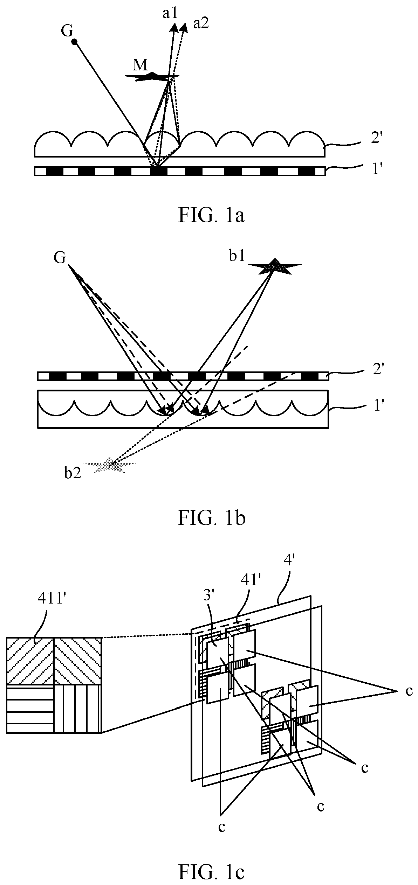

Stereoscopic image display can present a two-dimensional planar pattern in three-dimensional stereoscopic display effect by using a specific optical method. Specifically, binocular parallax and motion parallax may be implemented by using an optical element having an imaging or light splitting function, such as a micro lens array (micro lens array, MLA) or a metasurface structure grating. FIG. 1a and FIG. 1b each are an example of a diagram of a principle of implementing stereoscopic image display by using the micro lens array. FIG. 1a shows a transmissive micro lens array solution. A micro image text 1' is disposed on a side that is of a micro lens array structure 2' and that is away from a light-emitting side. A light ray emitted by an external light source G passes through the micro lens array structure 2 and forms diffuse reflection. The diffusely reflected light ray of the micro image text 1' carries pattern information of the micro image text 1' and is emitted through the micro lens array structure 2'. For example, based on light field imaging and presentation principles, a light ray a1 and a light ray a2 that are emitted from different positions on the micro image text 1' can respectively form information about different viewpoints, to present a stereoscopic pattern with binocular parallax and motion parallax. If this solution is applied to a flat-plate structure that has a high requirement on stability and a thickness size, such as a mobile phone, a gap in the micro lens array structure 2' needs to be filled with a medium to form a flat-plate structure. This affects refraction performance of the micro lens array. In addition, due to limitations of a refractive index of a material of a micro lens and a spherical surface processing technology, a degree of freedom for adjusting and controlling the micro lens is limited, and it is difficult to process a lens whose f-number F# is less than 1. This affects a viewing angle of stereoscopic texture. In addition, a duty cycle of the micro lens array cannot reach 100%, and optical control efficiency is limited. FIG. 1b shows a reflective micro lens array solution. A micro image text 1' is disposed on a light emitting side of a micro lens array structure 2'. After passing through the micro image text 1', a light ray emitted by an external light source G carries information about the micro image text 1' and is irradiated onto the micro lens array structure 2'. A part of the light ray is reflected by the micro lens array structure 2' and then converged to form a real image b1 of stereoscopic texture, and a part of the light ray is converged in a reverse extension line of a reflection direction to form a virtual image b2 of stereoscopic texture. In this solution, a surface of the micro lens array structure 2' may be filled with a reflective material to form a flat-plate structure, but an indelible virtual image b2 may appear. When an external environment is a point light source environment, a shadow of the virtual image b2 is obvious. When an external environment is a non-point light source environment, a shadow of the virtual image b2 is disordered. Because a non-point light source environment in a real scenario is complex, this solution affects display effect of stereoscopic texture.

FIG. 1c is an example of a diagram of a principle of displaying a stereoscopic image by using a metasurface structure grating. A metasurface structure grating 3' is disposed on a light-emitting surface side of a display 4', and the metasurface structure grating 3' guides pixels 411' on the display 4' to directions of specific viewpoints in a one-to-one correspondence, so that information about a plurality of different viewpoints is transmitted in space. One metasurface structure grating structure 3' is correspondingly disposed for each viewpoint. Herein, for example, the display 4' has a plurality of image units 41', each image unit 41' has four pixels 411', and one metasurface structure grating 3' is disposed on the four pixels 411' in each image unit 41' in a one-to-one correspondence. A viewpoint c is formed after light rays emitted by pixels 411' at a same position in different image units 41' is modulated by a corresponding metasurface structure grating 3'. Herein, four viewpoints c at different positions are correspondingly shown. After obtaining information about the different viewpoints c, human eyes can obtain a stereoscopic pattern presentation. This solution is mainly applied to a display field, and needs to be combined with the display 4' to cooperate with a red, green, blue (red, green, blue, RGB) pixel arrangement and a parameter of a commercial display. In addition, a backlight source of the display needs to be collimated light. Therefore, this solution has many restrictions on application scenarios.

It can be learned that, when the technical solution for implementing stereoscopic texture in the conventional technology is applied to a terminal device, there are many limitations, or display effect is imperfect, and good stereoscopic display effect cannot be compatible with a housing of the terminal device. Based on this, embodiments of this application provide a stereoscopic image text structure, an image text module, and a terminal device, to implement good stereoscopic texture display effect and meet a current use requirement.

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

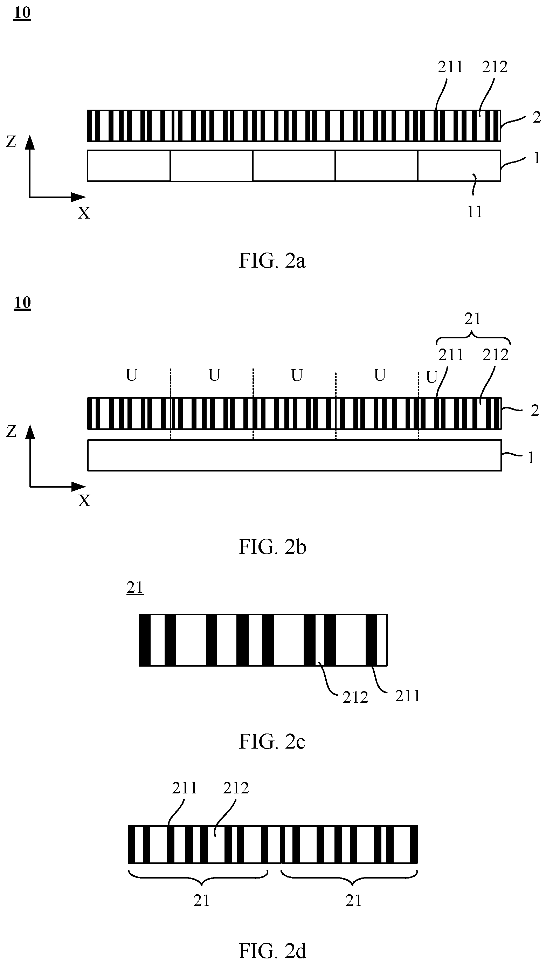

Refer to an example of a stereoscopic image text structure 10 shown in FIG. 2a, the stereoscopic image text structure 10 can present a two-dimensional pattern as three-dimensional stereoscopic display in a human eye system. The stereoscopic image text structure 10 includes a micro image text module 1 and a micro lens array module 2. The micro image text module 1 and the micro lens array module 2 are stacked. Herein, a stacking direction of the micro image text module 1 and the micro lens array module 2 is defined as a first direction Z. From a macro perspective, both the micro image text module 1 and the micro lens array module 2 are panel-shaped, and the first direction Z is perpendicular to the micro image text module 1 and the micro lens array module 2. The micro image text module 1 includes a plurality of micro image text units 11, and the plurality of micro image text units 11 are arranged perpendicular to the first direction Z. Herein, some micro image text units 11 arranged in a second direction X are shown as an example. The micro lens array module 2 includes a plurality of micro unit structures 211 arranged perpendicular to the first direction Z, and each micro structural unit 211 has a micronano size. A focal length f of each micro unit structure 211 may be consistent, or may vary with arrangement space of the micro unit structure 211. This is not limited herein.

It may be considered that a radial size that is of the micro unit structure 211 and that is in a direction perpendicular to the first direction Z is a micrometer scale or a nanometer scale. A medium 212 is filled between any two adjacent micro lens units 21. The medium 212 is not gas, and may be a solid, a fluid, or another material form. When the medium 212 is filled in a gap between the micro lens units 21, a surface that is of the medium 212 and that is away from the micro image text module 1 is disposed to be flush with a surface that is of the micro unit structure 211 and that is away from the micro image text module 1. In this way, a surface that is of the micro lens array module 2 and that is away from the micro image text module 1 is flat and smooth. Such a micro lens array module 2 is more easily flattened, and has better wear resistance performance. During application, the stereoscopic image text structure 10 can be more conveniently compatible with another flat-panel structure, for example, a housing of a mobile phone or a film layer of a component.

The medium 212 and the micro unit structure 211 have different refractive indexes. When a light ray is transmitted in the micro lens array module 2, the light ray is deflected under a joint action of the micro unit structure 211 and the medium 212. When the light ray carries information about the micro image text module 1 and is incident to the micro lens array module 2, the micro lens array module 2 may modulate the light ray, to refract an optical path. In this embodiment of this application, the micro lens array module 2 may modulate the light ray from the micro image text module 1, to form a stereoscopic image text on a side that is of the micro lens array module 2 and that is away from the micro image text module 1.

The stereoscopic image text may also be referred to as a stereoscopic image. Eyes and a brain system of an observer can integrate information of the stereoscopic image text and sense three-dimensional stereoscopic effect. The stereoscopic image text may be represented in a manner of image text with obvious depth sensing, that is, stereoscopic image text at different positions has different depth information. Alternatively, the stereoscopic image text may be represented in a manner of changing an observation angle or position, and dynamic effect is generated by the stereoscopic image text, for example, dynamic effect such as zoom-in, zoom-out, and rotation of the stereoscopic image text. Alternatively, the stereoscopic image text may be represented in a manner of changing the observation angle or position, so that the stereoscopic image text has effect of color switching. Alternatively, the stereoscopic image text may be represented in a manner of a combination of at least two of the foregoing several representation manners. Still refer to FIG. 2b. The micro lens array module 2 is divided into a plurality of optical regions U in an arrangement direction of the plurality of micro unit structures 211. The micro unit structure 211 and the medium 212 that are located in a same optical region U form a micro lens unit 21. FIG. 2c shows a structure of the micro lens unit 21. It may be considered that the micro lens array module 2 includes a plurality of micro lens units 21 arranged perpendicular to the first direction Z, each micro lens unit 21 includes a plurality of micro unit structures 211, and a medium 212 is filled between any two micro unit structures 211. For one micro lens unit 21, the medium 212 may alternatively wrap a periphery of the micro unit structure 211 in the arrangement direction of the micro unit structures 211. For the micro lens array module 2, it is equivalent to that the medium 212 is filled between any two adjacent micro unit structures 211, and the medium 212 is also filled between any two adjacent micro lens array modules 2. When there is a gap between any two adjacent micro lens units 21, the medium 212 is also filled between the any two adjacent micro lens units 21. For an example that is of the two micro lens units 21 and that is shown in FIG. 2d, the medium 212 is filled between the two micro lens units 21. The medium 212 is also filled between any two micro unit structures 211 in each micro lens unit 21.

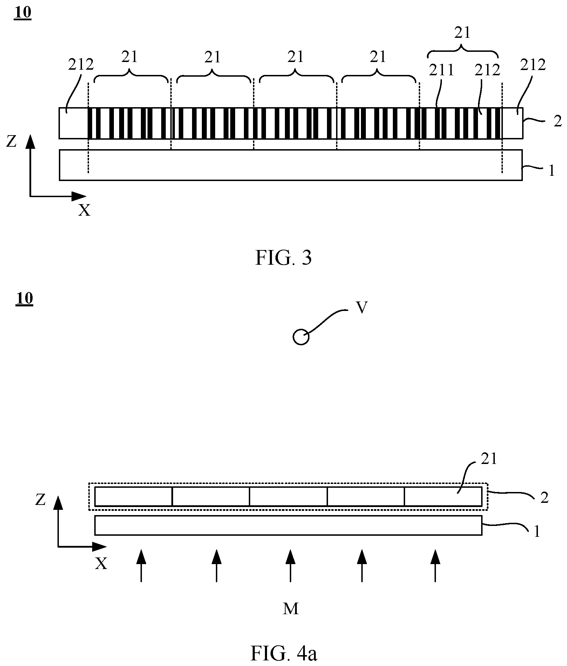

Possibly, as shown in FIG. 3, the medium 212 may alternatively be disposed on an edge that is of the micro lens array module 2 and that is perpendicular to the first direction, to protect a structure.

The plurality of micro lens units 21 are arranged perpendicular to the first direction Z, to form a regular array or an irregular array. It should be understood that a structure perpendicular to the first direction Z may be considered as one surface, and the plurality of micro lens units 21 are equivalent to being arranged on the one surface. In FIG. 2b and FIG. 3, the second direction X is used as an example, and the second direction X is on a surface perpendicular to the first direction Z.

In FIG. 2a, FIG. 2b, and FIG. 3, the micro image text module 1 and the micro lens array module 2 are stacked in the first direction Z, but a stacking sequence of the micro image text module 1 and the micro lens array module 2 is not limited. The following describes, by using two specific application scenarios, an example of a manner of stacking the micro image text module 1 and the micro lens array module 2.

As shown in FIG. 4a, when an observer V is located on a side that is of the micro lens array module 2 and that is away from the micro image text module 1, and a light source M is located on a side that is of the micro image text module 1 and that is away from the micro lens array module 2, a light ray emitted by the light source M needs to pass through the micro image text module 1 and carry information about the micro image text module 1, and is obtained by the observer V after being modulated by the micro lens array module 2. In this case, the micro lens array module 2 is of a transmissive type. In FIG. 4a, it is equivalent that the micro lens array module 2 is located before the micro image text module 1.

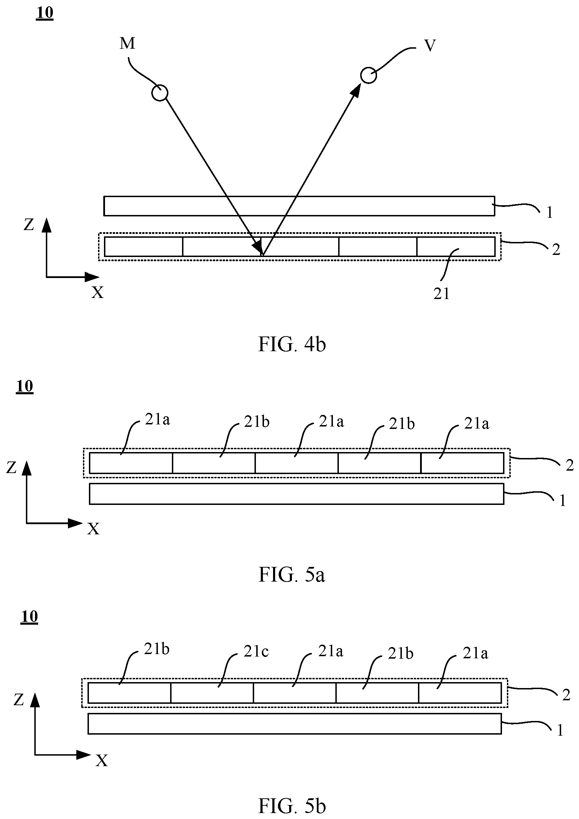

As shown in FIG. 4b, when both the observer and the light source M are located on a side that is of the micro lens array module 2 and that is away from the micro image text module 1, a light ray emitted by the light source M needs to pass through the micro image text module 1 and carry information about the micro image text module 1, and is obtained by the observer V after being modulated by the micro lens array module 2. In this case, the micro lens array module 2 is of a reflective type. In FIG. 4b, it is equivalent that the micro lens array module 2 is located after the micro image text module 1.

It should be understood that FIG. 4a and FIG. 4b are merely example descriptions of a manner of stacking the micro image text module 1 and the micro lens array module 2. The manner of stacking the micro image text module 1 and the micro lens array module 2 may be further adaptively adjusted based on an application scenario of the micro image text module 1 and the micro lens array module 2. In FIG. 4a and FIG. 4b, an arrow pointing from the light source M to the observer V is merely an example of an overall direction of the light ray, and is not an actual direction of the light ray. In application, positions of the micro image text module 1 and the micro lens array module 2 may be adjusted and exchanged based on a position of the light source and a display requirement.

The micro lens unit 21 may be one of a binary optical element, a metasurface optical element, and a Fresnel lens optical element, or may be a combination of at least two of these optical elements. In an arrangement direction of the micro unit structures 211, a maximum radial size of each micro lens unit is less than 150 µm.

In one micro lens array module 2, there may be different micro lens units 21. As shown in FIG. 5a, the micro lens array module 2 includes two types of micro lens units 21, the two types of micro lens units 21 are respectively a micro lens unit 21a and a micro lens unit 21b, and the micro lens units 21a and the micro lens units 21b are arranged at intervals. Alternatively, as shown in FIG. 5b, the micro lens array module 2 includes three types of micro lens units 21, and the three types of micro lens units 21 are respectively a micro lens unit 21a, a micro lens unit 21b, and a micro lens unit 21c. The three types of micro lens units 21 may be regularly arranged, or may be irregularly arranged. For example, the micro lens unit 21a is a binary optical element, the micro lens unit 21b is a metasurface optical element, and the micro lens unit 21c is a Fresnel lens optical element.

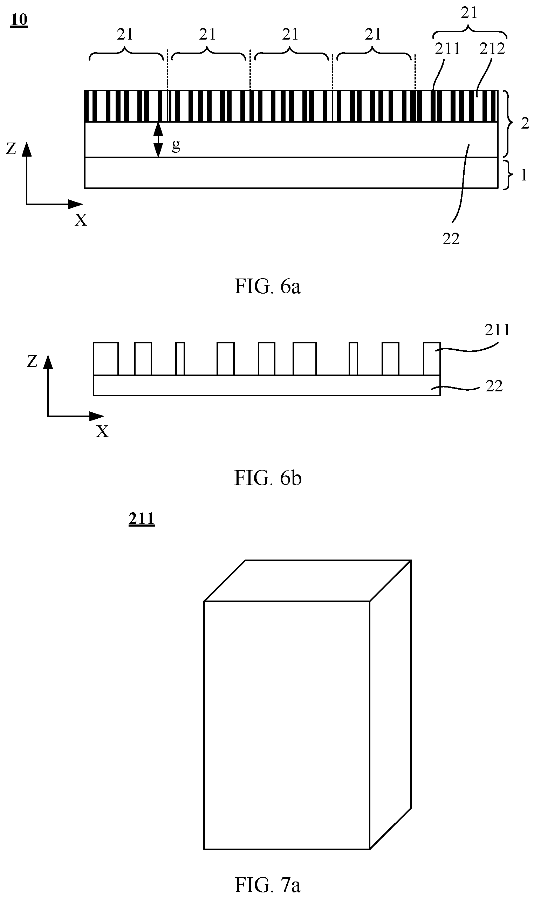

As shown in FIG. 6a, the micro lens array module 2 further includes a substrate layer 22. The substrate layer 22 is located between the micro lens unit 21 and the micro image text module 1. The micro unit structure 211 and the medium 212 are fastened to a side that is of the substrate layer 22 and that is away from the micro image text module 1. A material of the substrate layer 22 includes any one or a combination of at least two of silicon dioxide, silicon nitride, polyethylene glycol terephthalate, and photoresist. Different micro lens units 21 may share one substrate layer 22, or may correspond to independent substrate layers 22. A thickness of the substrate layer 22 is a distance g between the micro lens array module 2 and the micro image text module 1, and an optical path H corresponding to the distance g is a product of the distance g and a refractive index of the substrate layer 22.

For example, the micro lens unit 21 is the metasurface optical element. The micro unit structure 211 in the micro lens unit 21 is specifically a sub-wavelength unit. In other words, in the arrangement direction of the micro unit structures 211, on a cross section of each micro unit structure 211, a distance between any two points is less than a wavelength of an incident light ray. In addition, a spacing between any two adjacent micro unit structures 211 is less than the wavelength of the incident light ray, so that the micro unit structure 211 can perform phase modulation on the incident light ray, thereby achieving optical path deflection effect. A shape of the micro unit structure 211 is not limited, and may be a geometric form of any sub-wavelength unit, for example, a columnar shape shown in FIG. 6b. It should be understood that the columnar shape herein means that the micro unit structure 211 has a large height-to-diameter ratio. A height direction of the micro unit structure 211 is perpendicular to a plane on which the micro lens unit 21 is located. A radial size of the micro unit structure 211 is a size parallel to the plane on which the micro lens unit 21 is located. The medium 212 is not shown in FIG. 6b.

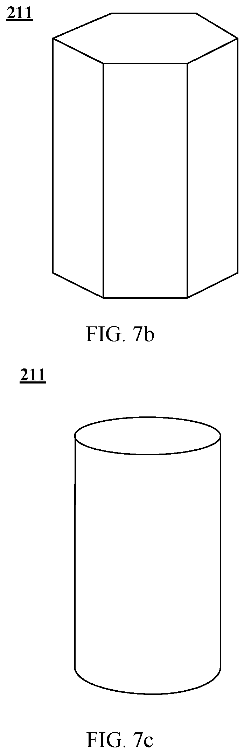

As shown in FIG. 7a to FIG. 7c, a cross section of the columnar micro unit structure 211 may be a rectangle shown in FIG. 7a, may be a multilateral shape shown in FIG. 7b, or may be a circle shown in FIG. 7c. The plurality of micro unit structures 211 shown in FIG. 6b are independent of each other, and may be arranged on the substrate layer 22 in a regular or irregular manner. In addition, a same micro lens unit 21 may include various micro unit structures 211 of different shapes.

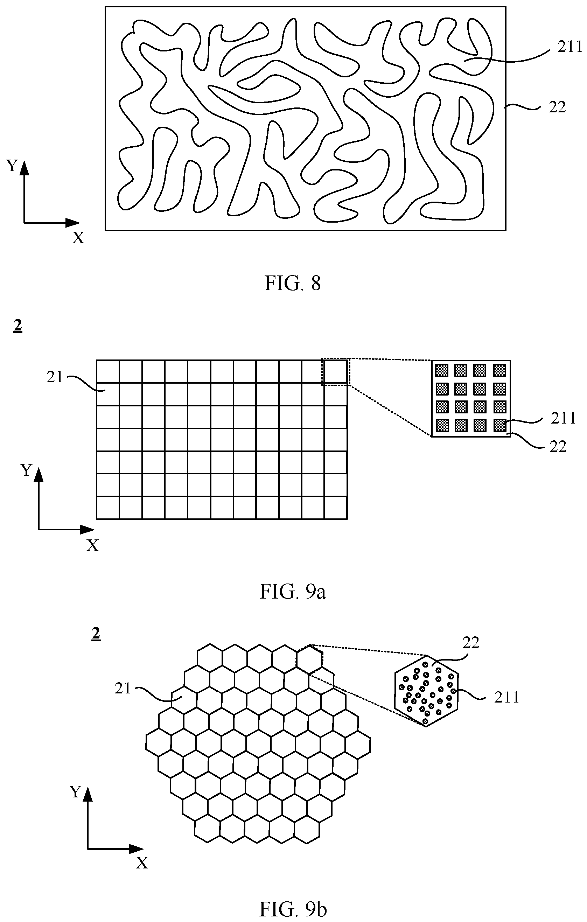

In some embodiments, as shown in FIG. 8, the micro lens unit 21 includes the substrate layer 22 and the micro unit structure 211 disposed on the substrate layer 22. The micro unit structure 211 is in an irregular connected shape, and may be considered as being formed by connecting a plurality of irregular micro unit structures 211.

With reference to the foregoing embodiment, FIG. 9a to FIG. 9c show top views of some micro lens array modules 2. The micro lens unit 21 has a columnar micro unit structure 211 in FIG. 6b.

In FIG. 9a, the micro lens unit 21 is rectangular, and the plurality of micro lens units 21 are in a rectangular array. Each micro lens unit 21 has a plurality of columnar micro unit structures 211 in a rectangular array, and the medium 212 filled between the micro unit structures 211 is not shown. For example, a cross section of the micro unit structure 211 is a rectangle.

In FIG. 9b, the micro lens unit 21 is in a hexagon shape, and the plurality of micro lens units 21 are arranged in a cellular shape. Each micro lens unit 21 has a plurality of irregularly arranged columnar micro unit structures 211, and the medium 212 filled between the micro unit structures 211 is not shown. For example, a cross section of the micro unit structure 211 is a circle.

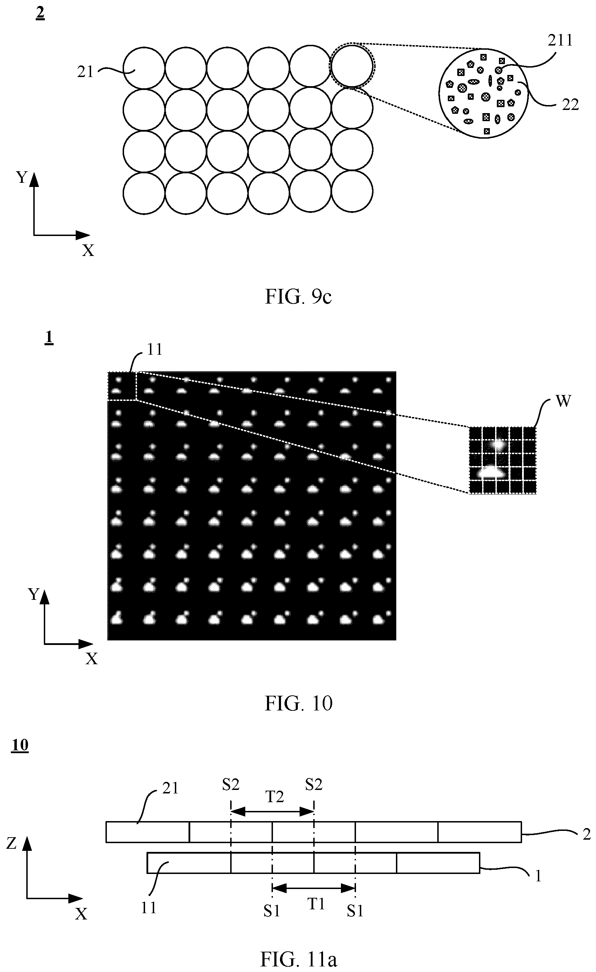

In FIG. 9c, the micro lens unit 21 is circular, and the plurality of micro lens units 21 are in a rectangular array. Each micro lens unit 21 has a plurality of irregularly arranged columnar micro unit structures 211, and the medium 212 filled between the micro unit structures 211 is not shown. For example, micro unit structures 211 of a plurality of structures are disposed in the micro lens unit 21. For example, a micro unit structure 211 with a circular cross section, a micro unit structure 211 with a rectangular cross section, a micro unit structure 211 with an ellipse cross section, and a micro unit structure 211 with a pentagon cross section.

To enable each micro lens unit 21 in the micro lens array module 2 to maintain a flat surface, the micro unit structures 211 may maintain an approximate height as much as possible, and a height direction of the micro unit structure 211 is parallel to the first direction Z.

It should be noted that selecting the metasurface optical element as the micro lens unit 21 can break a limitation that a processing process is significantly affected by different design solutions of a conventional lens array. In the micro lens array module 2 shown in FIG. 9a and FIG. 9b, the micro lens units 21 can be closely arranged, so that a duty cycle of the micro lens array module 2 can be close to 100%.

Specifically, a refractive index of the micro unit structure 211 may be greater than a refractive index of the medium 212. For example, the refractive index of the micro unit structure 211 is 2.4, and the refractive index of the medium 212 is 1.6. Alternatively, the refractive index of the micro unit structure 211 may be less than the refractive index of the medium 212. For example, the refractive index of the micro unit structure 211 is 2.0, and the refractive index of the medium is 2.5. Provided that there is a refractive index difference between the micro unit structure 211 and the medium 212. Generally, to achieve good modulation effect on s light ray, when the metasurface optical element is selected as the micro lens unit 21, the difference between the refractive index of the micro unit structure 211 and the refractive index of the medium 212 is greater than 0.5.

A material of the micro unit structure 211 includes any one or a combination of at least two of silicon nitride, gallium nitride, and titanium dioxide. A material of the medium 212 includes any one or a combination of at least two of silicon dioxide, polyethylene glycol terephthalate, and photoresist. It should be understood that, in one micro lens array module 2, different micro unit structures 211 and different media 212 may be selected, but a condition that refractive indexes of the micro unit structures 211 and the media 212 are not equal needs to be met.

With reference to FIG. 2a, as shown in FIG. 10, the micro image text unit 11 is a two-dimensional pattern unit, each micro image text unit 11 has corresponding pattern information, and patterns on the micro image text units 11 are different. When cooperating with a light source, each micro image text unit 11 includes pattern information in different directions. Each micro image text unit 11 has a plurality of object point units W, and one object point unit W may be considered as one minimum ink point. Each object point unit W represents pattern information of the micro image text unit 11 in one direction. The plurality of object point units W may be represented by N×N, and one micro image text unit 11 in FIG. 10 has 5×5 object point units W. A manufacturing process of the micro image text unit 11 is not limited. The micro image text unit 11 may be specifically a groove ink-filled structure and in a metasurface structure color.

The micro lens units 21 may be periodically arranged, pseudo-randomly arranged, or uniformly randomly arranged in the first direction. The periodically arranged micro lens units 21 may be arranged in a fixed period, for example, in a quadrilateral shape or a cellular shape. The pseudo-randomly arranged micro lens units 21 may be arranged in a locally random manner but globally in a plurality of periods. The uniformly randomly arranged micro lens units 21 may be that micro lenses are globally arranged evenly, but are not arranged in any periodicity at a spatial position.

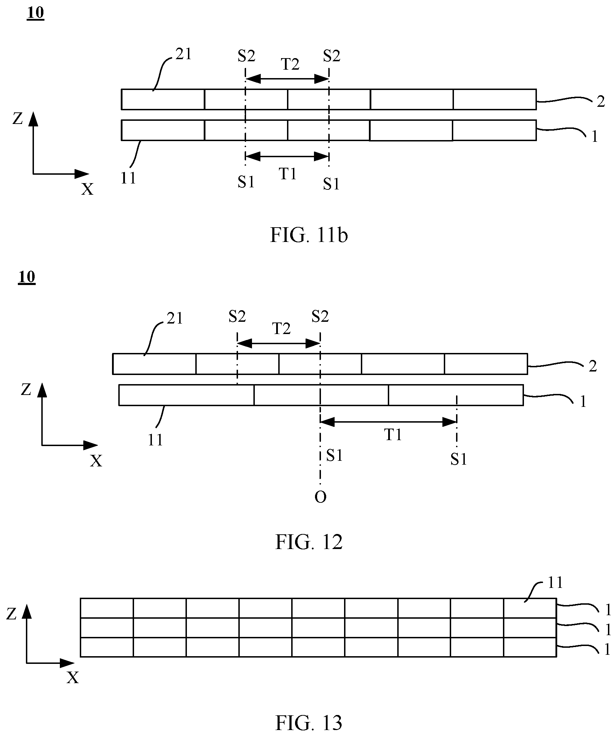

When the micro image text units 11 are periodically arranged, the micro lens units 21 may also be periodically arranged. As shown in FIG. 11a and FIG. 11b, the micro image text unit 11 has an array period T1, and the micro lens unit 21 has an array period T2. An array period may also be considered as an arrangement period of periodic arrangement.

As shown in FIG. 11a, the array periods of the micro lens unit 21 and the micro image text unit 11 may be set to be the same. A distance between optical axes S2 of any two adjacent micro lens units 21 is the array period T2 of one micro lens unit 21, and a distance between optical axes S1 of any two adjacent micro image text units 11 is the array period T1 of one micro image text unit 11. Further, the micro lens units 21 and the micro image text units 11 may be arranged in a one-to-one correspondence manner. As shown in FIG. 11b, in the first direction Z, the one micro lens unit 21 corresponds to the one micro image text unit 11. Between the micro lens unit 21 and the micro image text unit 11 that correspond to each other, the optical axis S2 of the micro lens unit 21 and the optical axis S1 of the micro image text unit 11 are collinear.

Alternatively, as shown in FIG. 12, the array period T2 of the micro lens unit 21 is less than the array period T1 of the micro image text unit 11. The optical axis S1 of the micro image text unit 11 at a central position of the micro image text module 1 is used as a central axis O, and the micro image text units 11 are evenly arranged. Similarly, the micro lens units 21 may also be periodically arranged outwards by using the central axis O as a center. It may be considered that, by using the central axis O as the center, the array period T1 of the micro image text unit 11 has a specific magnification ratio compared with the array period T2 of the micro lens unit 21.

It should be understood that, in the foregoing embodiment, periodic arrangement of the micro lens unit 21 and the micro image text unit 11 is described by using one direction as an example. In actual application, the periodic arrangement direction of the micro lens unit 21 and the micro image text unit 11 may be further complex. Details are not further described herein.

As shown in FIG. 13, there may be a plurality of micro image text modules 1. In this example, there are three micro image text modules 1. The plurality of micro image text modules 1 are sequentially stacked in the first direction. Micro image text units 11 in different micro image text modules 1 may be in a one-to-one correspondence in the first direction, or may not have a correspondence.

In the stereoscopic image text structure provided in this application, a principle of modulating a light ray by the micro lens module 2 may be an integrated imaging principle, or may be a dynamic Moore principle. Next, the integrated imaging principle is used as an example to describe an imaging principle of the stereoscopic image text structure in this application.

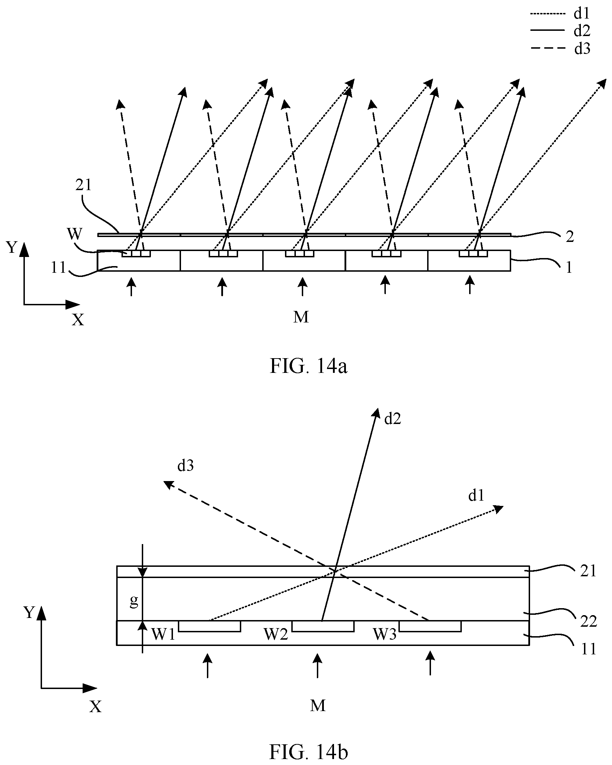

A stereoscopic image text structure 10 shown in FIG. 14a is used as an example. A light source M is located on a side that is of a micro image text module 1 and that is away from a micro lens array module 2. When a light ray emitted by the light source M passes through the micro image text module 1, the light ray carries pattern information of each micro image text unit 11 and is irradiated onto the micro lens array module 2. For example, there are five micro image text units 11 and five micro lens units 21, and the micro image text units 11 are in a one-to-one correspondence with the micro lens units 21 in a first direction Z. The micro lens array module 2 modulates light rays that carry pattern information of corresponding micro image text units 11, so that the light rays that are from different micro image text units 11 and have a same direction form information about one viewpoint. Each micro image text unit 11 shows object point units W at three positions, and each object point unit W represents pattern information of the micro image text unit 11 in one direction. After the light rays corresponding to three object point units W on each micro image text unit 11 are modulated by the micro lens array module 2, light rays corresponding to the object point units W in a same direction in different micro image text units 11 form a same viewpoint. In this way, each viewpoint can obtain an image formed by each micro image text unit 11. A light ray d1, a light ray d2, and a light ray d3 represent, for example, light rays corresponding to the object point unit W that has pattern information in three directions in each micro image text unit 11, and a light ray corresponding to each object point unit W represents, for example, a direction of a main optical axis of the light ray.

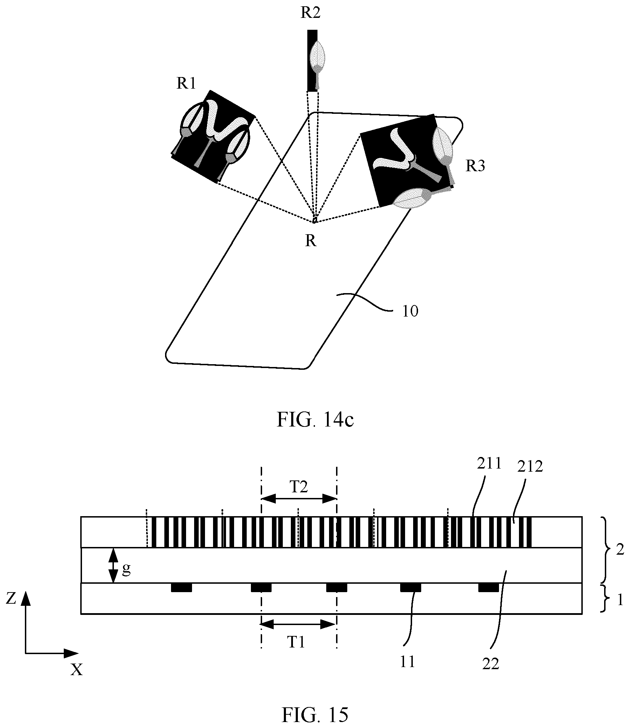

With reference to an example, shown in FIG. 14b, of a group of micro image text units 11 and micro lens units 21 that correspond to each other, an object point unit W1, an object point unit W2, and an object point unit W3 are shown for the micro image text unit 11. The three object point units W represent pattern information of the micro image text unit 11 in the three directions. After being modulated by the micro lens unit 21, the light ray d1, the light ray d2, and the light ray d3 are emitted. The light ray d1 carries pattern information of the object point unit W1 and corresponds to one viewpoint. The pattern information of the object point unit W1 may be obtained at the viewpoint. The light ray d2 carries pattern information of the object point unit W2 and corresponds to a viewpoint. The pattern information of the object point unit W2 may be obtained at the viewpoint. The light ray d3 carries pattern information of the object point unit W3 and corresponds to a viewpoint. The pattern information of the object point unit W3 may be obtained at the viewpoint. An observer can obtain the pattern information of the micro image text unit 11 in different directions by using different viewpoints, and can obtain a three-dimensional stereoscopic image after analysis and fusion by human eyes and a brain system. In other words, the two-dimensional image carried by the micro image text module 1 may present the three-dimensional stereoscopic image at the observer. FIG. 14c shows three different images R1, R2, and R3 obtained at three different observation positions by using a pattern of each region R in the stereoscopic image text structure 10. The image R1, the image R2, and the image R3 are respectively patterns formed by image information in different directions of the region R in the stereoscopic image text structure 10. The image R1, the image R2, and the image R3 can be integrated to present three-dimensional stereoscopic effect in a binocular system of a person.

When a metasurface optical element is selected as the micro lens unit 21, a degree of freedom of structure design is greater. Due to excellent performance of the metasurface, a more refined, personalized, and non-uniform design can be provided for definition, an angle of view, and a depth of field of a stereoscopic image text, to help generate stereoscopic texture with better effect and a richer style.

Still refer to FIG. 14b. There is a distance g between the micro lens array module 2 and the micro image text module 1, and an optical path H between the micro lens array module 2 and the micro image text module 1 is a product of the distance g and a refractive index of the substrate layer 22. The optical path H between the micro image text module 1 and the micro lens array module 2 is less than twice a focal length f of the micro lens unit. Specifically, when the optical path H is equal to the focal length f of the micro lens unit, a mode in which the stereoscopic image text structure 10 implements a stereoscopic image is a focusing mode. When the optical path H is less than the focal length f of the micro lens unit, the mode in which the stereoscopic image text structure 10 implements the stereoscopic image is a virtual mode. When the optical path H is greater than the focal length f of the micro lens unit and less than twice the focal length f of the micro lens unit, the mode in which the stereoscopic image text structure 10 implements the stereoscopic image is a real mode.

For ease of understanding, the following specifically describes, by using an example, the stereoscopic image text structure 10 provided in this embodiment of this application.

FIG. 15 shows the stereoscopic image text structure 10. The stereoscopic image text structure 10 includes a micro lens array module 2 and a micro image text module 1. The micro lens array module 2 is of a transmissive type, and a metasurface is selected for a micro lens unit 21. Both the micro lens units 21 in the micro lens array module 2 and a micro image text unit 11 in the image text module 1 are periodically arranged, and an array period of the micro lens units 21 is the same as an array period of the micro image text units 11. Specifically, an array period T2 of the micro lens unit 21 is 80 µm, and an array period of the micro image text unit 11 is also 80 µm. In a first direction Z, the micro lens units 21 are in a one-to-one correspondence with the micro image text units 11, that is, an optical axis of the micro lens unit 21 and an optical axis of the micro image text unit 11 are collinear. In a second direction X perpendicular to the first direction Z, a size of the micro lens unit 21 is 80 µm, and a duty cycle D/T1 of the micro lens array module 2 is approximately 100%. The micro image text unit 11 is a square of 80 µm×80 µm. Each micro image text unit 11 has 20×20 object point units W, each object point unit W represents a minimum ink point, and a size of each object point unit W in the second direction X is 4 µm. An inorganic transparent material, for example, silicon dioxide or silicon nitride is selected for a substrate layer 22. Alternatively, an organic material, for example, polyethylene glycol terephthalate is selected for the substrate layer 22. A refractive index of a medium 212 is lower than a refractive index of a micro structural unit 211 in the micro lens unit 21. An inorganic transparent material whose refractive index is less than 1.6, for example, silicon dioxide may be selected for the medium 212. Alternatively, an organic material, for example, polyethylene glycol terephthalate or a photoresist material is selected for the medium 212. A transparent material with a refractive index is selected for the micro structural unit 211, for example, silicon nitride with a refractive index of about 2.0, gallium nitride with a refractive index of about 2.4, and titanium dioxide with a refractive index of about 2.6.

Macroscopically, in the stereoscopic image text structure 10 shown in FIG. 15, a size of the micro image text module 1 is 15 mm×6.6 mm, a total resolution is 37560×16680, that is, about 626.5 million pixels, and a light scene algorithm needs to be used to calculate massive data. Focal lengths f of all the micro lens units 21 are consistent, the focal length f is 20 µm, a calculation formula of an aperture F# is: F#=f/D=0.25, and a distance g between the micro lens array module 2 and the micro image text module 1 is 22 µm. Real-mode stereoscopic texture effect can be obtained through imaging by using the stereoscopic image text structure 10.

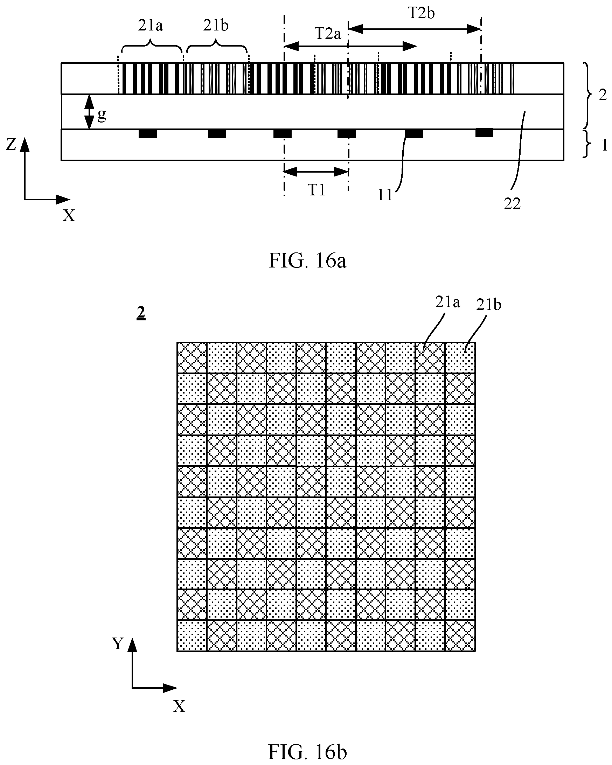

FIG. 16a shows another stereoscopic image text structure 10. The stereoscopic image text structure 10 includes a micro lens array module 2 and a micro image text module 1. The micro lens array module 2 is of a transmissive type, and a metasurface is selected for a micro lens unit 21. Both the micro lens units 21 in the micro lens array module 2 and a micro image text unit 11 in the image text module 1 are periodically arranged, and an array period of the micro lens units 21 is the same as an array period of the micro image text units 11. In a first direction Z, the micro lens units 21 are in a one-to-one correspondence with the micro image text units 11, that is, an optical axis of the micro lens unit 21 and an optical axis of the micro image text unit 11 are collinear. Specifically, the micro lens array module 2 includes two types of micro lens units 21: a micro lens unit 21a and a micro lens unit 21b that are disposed at intervals. For an arrangement manner of the micro lens unit 21a and the micro lens unit 21b, refer to FIG. 16b. In a second direction X or in a third direction Y, a micro lens unit 21 before the micro lens unit 21a is the micro lens unit 21b, a micro lens unit 21 after the micro lens unit 21a is the micro lens unit 21b. Similarly, a micro lens unit 21 before the micro lens unit 21b is the micro lens unit 21a, and a micro lens unit 21 after the micro lens unit 21b is the micro lens unit 21a. An array period T2a of the micro lens unit 21a is 120 µm, an array period T2b of the micro lens unit 21b is 120 µm, and an array period of the micro image text unit 11 is 60 µm. In a second direction X perpendicular to the first direction Z, a size of the micro lens unit 21 is 60 µm, and a duty cycle D/T1 of the micro lens array module 2 is approximately 100%. The micro image text unit 11 is a square of 60 µm×60 µm. Each micro image text unit 11 has 15×15 object point units W, each object point unit W represents a minimum ink point, and a size of each object point unit W in the second direction X is 4 µm. An inorganic transparent material, for example, silicon dioxide or silicon nitride is selected for a substrate layer 22. Alternatively, for materials of the substrate layer 22, the medium 212, and the micro structural unit 211, refer to the foregoing embodiments.

Macroscopically, in the stereoscopic image text structure 10 shown in FIG. 16a, the micro lens array module 2 has two lens parameters, where a focal length fa of the micro lens unit 21a is selected as 50 µm, and a focal length fb of the micro lens unit 21b is selected as 60 µm. A distance g between the micro lens array module 2 and the micro image text module 1 is 55 µm. For the micro lens unit 21a, real-mode stereoscopic texture effect can be obtained through imaging by using the stereoscopic image text structure 10. For the micro lens unit 21b, virtual-mode stereoscopic texture effect can be obtained through imaging by using the stereoscopic image text structure 10. In a human dual-eye vision system, the real-mode stereoscopic texture effect protrudes from the micro lens array module 2, and the virtual-mode stereoscopic texture effect is concave into the micro lens array module 2. Therefore, a depth of field of overall texture can be increased, so that a stereoscopic sense is more obvious.

It should be noted that, compared with the stereoscopic image text structure 10 shown in FIG. 15, in the stereoscopic image text structure 10 shown in FIG. 16a, micro lens units 21 with a plurality of parameters are integrated into one micro lens array module 2, so that a focal length of the micro lens units 21 is no longer uniquely fixed. Instead, the focal length of the micro lens units 21 may change with a spatial position, so that a depth sense of the stereoscopic texture can be improved, and a stereoscopic sense of the stereoscopic texture can be further improved. However, resolution of the stereoscopic image text structure 10 shown in FIG. 16a is sacrificed to some extent. Therefore, the stereoscopic image text structure 10 may be applied to a scenario in which the human dual-eye vision system is insensitive to resolution sacrifice.

The stereoscopic image text structure 10 provided in this embodiment of this application may be applied to various scenarios in which stereoscopic image text display is required. The micro lens array module 2 is filled with the medium 212 to form a flat plate, and may be combined with various substrate architectures. A mobile phone architecture is used as an example. When the micro lens array module 2 is of a transmissive type, an optically clear adhesive (optically clear adhesive, OCA), polyethylene glycol terephthalate, outer protective glass, or the like is added to a side that is of the micro lens array module 2 and that is away from the micro image text module 1, to form a mobile phone housing architecture. When the stereoscopic image text structure 10 is observed from different angles of view, different stereoscopic texture can be seen, and there is obvious motion parallax. In addition, the micro lens unit 21 in the stereoscopic image text structure 10 has a large selection range, and a phase surface of the micro lens unit 21 may be randomly designed, so that an aperture F# can be designed to be smaller, thereby increasing a viewing angle. In this case a duty cycle of the micro lens array module 2 can be close to 100%, and a light transmittance is increased.

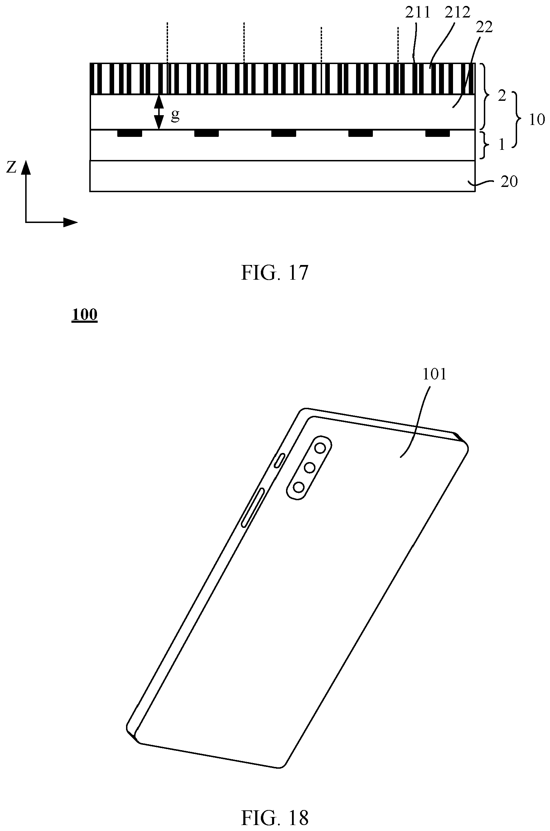

Based on the foregoing stereoscopic image text structure 10, an embodiment of this application further provides an image text apparatus. As shown in FIG. 17, the image text apparatus specifically includes a substrate 20 and any one of the foregoing stereoscopic image text structures 10. The substrate 20 may be specifically a film layer, or may be a housing. This is not specifically limited. Because the stereoscopic image text structure 10 has a flat surface, the stereoscopic image text structure can be well compatible with and packaged with substrates 20 of various materials. This helps expand an application scenario of a stereoscopic texture technology under stable structure protection effect.

It should be understood that the stereoscopic image text structure 10 may be applied to an industrial design end of an electronic consumer product or a household appliance, decoration, and packaging, printing, and anti-counterfeiting of a high-end brand. When the substrate 20 is applied to a terminal device, the substrate 20 may be a back cover of a mobile phone, a housing of a headset, a watchband of a watch, a glass housing of a speaker, an outer package of an electronic product, or the like.

An embodiment of this application further provides a terminal device. The terminal device may be an electronic device such as a laptop, a mobile phone, or a smartwatch. The mobile phone shown in FIG. 18 is used as an example. The mobile phone 100 has a device housing 101. The device housing 101 may be used as the substrate 20 in the foregoing embodiment, and the stereoscopic image text structure 10 is combined on the device housing 101. When the mobile phone 100 is used, two eyes of an observer can obtain different texture patterns on the device housing 101, and stereoscopic texture with a depth sense and a stereoscopic sense is obtained through brain fusion.

The terminal device with the stereoscopic image text structure 10 can meet requirements and expectations of consumers for appearance diversity, a sense of science and technology, a sense of coolness, and a sense of quality of the terminal device. For vendors, the stereoscopic image text structure 10 can be used as a "black technology" and a selling point of the terminal device to improve product competitiveness and attract more potential consumers' attention.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A stereoscopic image text structure (10), comprising a micro image text module (1) and a micro lens array module (2) that are sequentially stacked, wherein a stacking direction of the micro image text module (1) and the micro lens array module (2) is a first direction,
the micro lens array module (2) comprises a plurality of micro unit structures (211) arranged perpendicular to the first direction, each micro unit structure (211) has a micronano size, a medium (212) is filled between any two adjacent micro unit structures (211), a refractive index of the medium (212) is not equal to a refractive index of the micro unit structure (211), and a surface that is of the medium (212) and that is away from the micro image text module (1) is flush with a surface that is of the micro unit structure (211) and that is away from the micro image text module (1); and
the micro image text module (1) comprises a plurality of micro image text units (11), the plurality of micro image text units (11) are arranged perpendicular to the first direction, and the micro lens array module (2) is configured to modulate a light ray from the micro image text module (1), to form a stereoscopic image text on a side that is of the micro lens array module (2) and that is away from the micro image text module (1).

2. The stereoscopic image text structure (10) according to claim 1, wherein in an arrangement direction of the micro unit structures (211), the micro lens array module (2) is divided into a plurality of optical regions, and the micro unit structures (211) and the medium (212) that are located in a same optical region form a micro lens unit (21).

3. The stereoscopic image text structure (10) according to claim 2, wherein the micro lens unit (21) is any one or a combination of a binary optical element, a metasurface optical element, and a diffractive optical element.

4. The stereoscopic image text structure (10) according to claim 3, wherein when the micro lens unit (21) is the metasurface optical element, a difference between the refractive index of the medium (212) and the refractive index of the micro unit structure (211) is greater than 0.5.

5. The stereoscopic image text structure (10) according to any one of claims 2 to 4, wherein the plurality of micro lens units (21) are periodically arranged, pseudo-randomly arranged, or uniformly randomly arranged.

6. The stereoscopic image text structure (10) according to any one of claims 2 to 5, wherein when the plurality of micro lens units (21) are periodically arranged, an array period of the plurality of micro image text units (11) and an array period of the plurality of micro lens units (21) are the same.

7. The stereoscopic image text structure (10) according to claim 6, wherein in the first direction, the plurality of micro image text units (11) are in a one-to-one correspondence with the plurality of micro lens units (21).

8. The stereoscopic image text structure (10) according to any one of claims 2 to 7, wherein an optical path between the micro image text module (1) and the micro lens array module (2) is less than twice a focal length of the micro lens unit (21).

9. The stereoscopic image text structure (10) according to any one of claims 2 to 8, wherein a maximum radial size of each micro lens unit (21) is less than 150 µm in the arrangement direction of the micro unit structures (211).

10. The stereoscopic image text structure (10) according to any one of claims 1 to 9, wherein the micro image text unit (11) is of a groove ink-filled structure or in a metasurface structure color.

11. The stereoscopic image text structure (10) according to any one of claims 1 to 10, wherein there are a plurality of micro image text modules (1), and the plurality of micro image text modules (1) are stacked in the first direction.

12. The stereoscopic image text structure (10) according to any one of claims 1 to 11, wherein the micro lens array module (2) further comprises a substrate layer (22), and the micro unit structure (211) and the medium (212) are fastened to a side that is of the substrate layer (22) and that is away from the micro image text module (1).

13. The stereoscopic image text structure (10) according to claim 12, wherein a material of the substrate layer (22) comprises any one or a combination of at least two of silicon dioxide, silicon nitride, polyethylene glycol terephthalate, and photoresist.

14. The stereoscopic image text structure (10) according to any one of claims 1 to 13, wherein a material of the micro unit structure (211) comprises any one or a combination of at least two of silicon nitride, gallium nitride, and titanium dioxide.

15. The stereoscopic image text structure (10) according to any one of claims 1 to 14, wherein a material of the medium (212) comprises any one or a combination of at least two of silicon dioxide, polyethylene glycol terephthalate, and photoresist.

16. An image text apparatus, comprising a substrate (20) and the stereoscopic image text structure (10) according to any one of claims 1 to 15, wherein
the stereoscopic image text structure (10) is disposed on a surface of the substrate (20).

17. A terminal device, comprising the image text apparatus according to claim 16.
